(19) Europäisches Patentamt / European Patent Office / Office européen des brevets

(11) **EP 2 240 806 B1**

(12) **EUROPÄISCHE PATENTSCHRIFT**

(45) Veröffentlichungstag und Bekanntmachung des Hinweises auf die Patenterteilung:
**20.07.2022 Patentblatt 2022/29**

(21) Anmeldenummer: **08860469.9**

(22) Anmeldetag: **19.11.2008**

(51) Internationale Patentklassifikation (IPC):
**G02B 5/08** (2006.01)  **B60R 1/08** (2006.01)
**B60R 1/12** (2006.01)

(52) Gemeinsame Patentklassifikation (CPC):
**G02B 5/0858; B60R 1/12;** B60R 1/1207;
B60R 2001/1215

(86) Internationale Anmeldenummer:
**PCT/EP2008/009764**

(87) Internationale Veröffentlichungsnummer:
**WO 2009/074209 (18.06.2009 Gazette 2009/25)**

(54) **HALBDURCHLÄSSIGER SPIEGEL**

SEMITRANSPARENT MIRROR

MIROIR SEMI-TRANSPARENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.12.2007 DE 102007060374**

(43) Veröffentlichungstag der Anmeldung:
**20.10.2010 Patentblatt 2010/42**

(73) Patentinhaber: **FLABEG Deutschland GmbH 90441 Nürnberg (DE)**

(72) Erfinder: **HÖING, Thomas 93413 Cham (DE)**

(74) Vertreter: **Tergau & Walkenhorst Patentanwälte PartGmbB Lurgiallee 12 60439 Frankfurt am Main (DE)**

(56) Entgegenhaltungen:
WO-A-2004/026633    WO-A-2007/053710
US-A- 6 065 840    US-A1- 2005 007 645
US-A1- 2007 053 085

**Beschreibung**

Die Erfindung betrifft einen halbdurchlässigen Spiegel, insbesondere zur Verwendung als Rückblickspiegel im Automobilbereich, insbesondere als InnenraumSpiegel.

Derartige Spiegel für eine Verwendung im Automobilbereich sind beispielsweise bekannt aus der WO 2007/053710 A2, der WO 2004/026633 A2 oder der US 2005/0007645 A1. Weitere Spiegel mit Mehrschichtaufbau sind aus der US 6065840 A und der US 2007/053085 A1 bekannt.

Rückblickspiegel im Automobilbereich werden üblicherweise nach einer Reihe von gängigen Kriterien ausgelegt und optimiert. Für typische bekannte Autospiegel, die beispielsweise auf der Grundlage von Beschichtungen aus den hoch reflektierenden Metallen Silber und/oder Aluminium aufgebaut sind, kommt dabei als wesentliches Auslegungs- und Optimierungskriterium die Erzielung besonders hoher Reflexionswerte in Betracht. Darüber hinaus werden in modernen Konzepten für Automobil-Rückblickspiegel aber auch noch eine Reihe weiterer Kriterien berücksichtigt, die für den Fahrer eine besonders hohe Wiedergabetreue auch bei wechselnden Umgebungs- oder Lichtverhältnissen und auch eine möglichst weitgehende Blendfreiheit oder -armut bei Nachtfahrten gewährleisten sollen. Hierbei können als Auslegungskriterien unter anderem die spektralen Reflexionseigenschaften, die Farbwiedergabe, die Blendarmut oder dergleichen berücksichtigt werden.

Derartige Aspekte werden üblicherweise zur Auslegung von Automobil- Rückblickspiegeln herangezogen, die ausschließlich eine Spiegelfunktion haben sollen. Dabei wird insbesondere - unter Vernachlässigung möglicher Absorptionseffekte - von einer mehr oder weniger vollständigen Reflexion des auf den Spiegel einfallenden Lichtstroms ausgegangen. Gerade in modernen Cockpit- oder Anzeigesystemen für Kraftfahrzeuge bestehen aber Bestrebungen, Spiegelelemente, insbesondere den Innenraumspiegel, über die eigentliche Spiegelfunktion hinaus mit weiteren Anzeige- oder Displayfunktionalitäten zu kombinieren. Dazu soll insbesondere das eigentliche Spiegelelement durch ein vom Betrachter aus gesehen dahinter angeordnetes Display- oder Anzeigeelement ergänzt werden, so dass dem Betrachter zusätzlich zum gespiegelten Bild über eine geeignete Ansteuerung der Anzeige- oder Displayeinheit noch weitere Informationen im selben Blickfeld angezeigt werden können. Die genannten herkömmlichen Automobil-Rückblickspiegel sind für einen derartigen kombinierten Aufbau nicht geeignet.

Der Erfindung liegt daher die Aufgabe zugrunde, einen halbdurchlässigen Spiegel, insbesondere zur Verwendung als Kraftfahrzeug-Rückblickspiegel oder Kraftfahrzeug-Innenraumspiegel, anzugeben, der für eine kombinierte Verwendung mit einem nachgeordneten Anzeige- oder Displayelement besonders geeignet ist.

Diese Aufgabe wird erfindungsgemäß gelöst, indem der halbdurchlässige Spiegel ein transparentes Substrat, vorzugsweise aus Kalknatronglas, umfasst, auf dem vorder- und/oder rückseitig eine mehrlagige Beschichtung aufgebracht ist, wobei die Beschichtung derart ausgestaltet ist, dass der Spiegel bei senkrechtem Lichteinfall unter Normlichtart C nach CIE 1971 an seiner Vorderseite einen Lichtreflexionsgrad von mindestens 60 %, vorzugsweise von mindestens 65 %, und an seiner Rückseite einen Lichtreflexionsgrad von höchstens 25 %, vorzugsweise von höchstens 20 %, sowie einen Lichttransmissionsgrad von mindestens 20 %, vorzugsweise von mindestens 25 %, aufweist.

Der Lichtreflexionsgrad ist dabei insbesondere als der integrale Reflexionswert entsprechend der Augenempfindlichkeitskurve gemäß CIE 1951 auszuwerten. Als dazugehörige Lichtart nach CIE 1971 ist dabei Normlichtart C, also ein dem Tageslicht-Spektrum entsprechendes Lichtspektrum, zugrunde zu legen. Mit "Vorderseite" ist dabei die beim bestimmungsgemäßen Gebrauch dem Betrachter zugewandte Seite oder auch die Lichteinfallseite bezeichnet, die beim Einsatz als Kraftfahrzeug-Innenraumspiegel dem Fahrzeug-Innenraum zugewandt ist. Als "Rückseite" ist hingegen die bei bestimmungsgemäßen Gebrauch vom Betrachter abgewandt und insbesondere bei einer kombinierten Verwendung mit einem nachgeordneten Anzeige- oder Displayelement diesem zugewandte Seite spezifiziert.

Die Erfindung geht von der Überlegung aus, dass der Spiegel für eine geeignete Kombinierbarkeit mit weiteren Anzeige- oder Displayelementen in der Art eines Strahlteilers als halbdurchlässiger Spiegel ausgestaltet sein sollte, der gezielt an die Erfordernisse für den Einsatz im Kraftfahrzeugbereich angepasst ist. Dabei sollte einerseits die Hauptfunktion des Spiegels, nämlich eine vergleichsweise hohe Reflexion unter den üblichen Betriebsbedingungen im Kraftfahrzeug, weitgehend erhalten bleiben, wobei andererseits eine geeignete Transmission zur ausreichenden Displaybeleuchtung eingestellt werden sollte. Bei der Auswahl und Vorgabe des Transmissionsgrades sollte zudem berücksichtigt werden, dass zwar einerseits eine ausreichend wirksame Displaybeleuchtung gewünscht ist, wobei andererseits aber auch die hinter dem Spiegel liegenden Bauteile für den Fahrer möglichst wenig wahrnehmbar oder sogar unsichtbar gehalten werden sollten. Des Weiteren sollte für den genannten Einsatzzweck die Reflexion an der Rückseite besonders klein gehalten sein, um Streulicht zu absorbieren und somit den Kontrast der nachfolgenden Displayeinheit zu verbessern.

Im Hinblick auf eine besonders günstige Anpassung der Spiegeleigenschaften an typische Beleuchtungsumfelder und eine geeignete Wiedergabetreue und Blendarmut sollte der halbdurchlässige Spiegel auch hinsichtlich seiner Farbeigenschaften geeignet ausgelegt sein. Die Farbe soll dabei in Reflexion und in Transmission möglichst neutral sein. Dazu ist der halbdurchlässige Spiegel vorzugsweise derart ausgestaltet, dass seine Farbwerte a* (C, 2°) und b* (C, 2°) jeweils in Reflexion an der Vorderseite oder Lichteinfallsseite sowie in Transmission bei senkrechtem Lichteinfall unter Normlichtart C und bei einem Beobachterwinkel von 2° einen absoluten Betrag von höchstens 10 aufweisen. Zur Definition der Farbeigenschaften wird dabei zurückgegriffen auf die für die quantitative und/oder qualitative Charakterisierung von Farbeigenschaften üblicherweise verwendeten, von der internationalen Beleuchtungskommission (Commission international de l' eclairage CIE) vorgegebenen Farbkoordinaten L*, a* und b* im sogenannten L*a*b*-Farbraum. Die für den Rückblickspiegel charakteristischen Farbkoordinaten werden dabei vorliegend bei senkrechtem Lichteinfall auf den Rückblickspiegel gemessen.

Erfindungsgemäß ist der halbdurchlässige Spiegel aus einer auf einem transparenten Substrat, vorzugsweise aus Kalk-Natron-Glas, aufgebrachten Beschichtung in der Form eines Mehrschicht- oder Mehrlagensystems aufgebaut. In besonders vorteilhafter Ausgestaltung ist dabei berücksichtigt, dass bekannte dielektrische Strahlteiler bei gegebener Reflexion üblicherweise eine zu hohe Transmission aufweisen, so dass hinter dem Spiegelsystem liegende Teile in unerwünschter Weise sichtbar sind, und dass die rückseitige Reflexion dabei unerwünscht hoch ist, so dass Streulicht bei Mehrfachreflexion den Kontrast mindern kann. Demgegenüber erreichen metallische Strahlteiler wie beispielsweise dünne Chromschichten bei gegebener Transmission nicht die erwünschte hohe Reflexion und sind zudem vergleichsweise kratzempfindlich. Dünne Metallschichten mit einer zusätzlichen Verspiegelungsschicht erfüllen hingegen die optischen Anforderungen zwar teilweise, jedoch ist die Absorption bei derartigen Systemen bei gegebener Reflexion noch zu hoch, und die Spiegel sind sehr kratzempfindlich, so dass eine Nutzung in hoher Stückzahl bei hoher betrieblicher Zuverlässigkeit nicht in Betracht kommt.

Um unter Berücksichtigung dieser Aspekte dennoch das genannte Auslegungskriterium zuverlässig zu erfüllen, ist in besonders vorteilhafter Ausgestaltung das für den halbdurchlässigen Spiegel vorgesehene mehrlagige Schichtsystem aus einer besonders geeignet gewählten Kombination von Schichten aus hochbrechendem Material einerseits, insbesondere mit einem Brechungsindex von mindestens zwei, niedrigbrechendem Material andererseits, insbesondere mit einem Brechungsindex von höchstens zwei, und einer metallischen Schicht aufgebaut. Dabei ist vorzugsweise eine Doppellage aus dem niedrigbrechenden Material einerseits und der metallischen Schicht andererseits in der Art einer Sandwichbauweise beidseitig von jeweils einer angrenzenden Schicht aus dem hochbrechendem Material begrenzt. Die gewünschten optischen Eigenschaften sind dabei insbesondere erreichbar, indem in Eintrittsrichtung des Lichts gesehen die Schicht aus niedrigbrechendem Material vor der Metallschicht angeordnet ist.

Der Spiegel kann dabei als Spiegel als sogenannter Position 1 - Spiegel, bei dem die Beschichtung auf Position 1, also auf der Seite des Betrachters oder der Lichteintrittsseite angeordnet ist, und das Substrat die Rückseite bildet oder auch als so genannter Position 2 - Spiegel, bei dem das Substrat die Vorderseite bildet und die Beschichtung in Position 2 auf der vom Lichteinfall abgewandten Seite und möglichen Anzeigeelementen zugewandt angeordnet ist, ausgeführt sein.

Für eine Anordnung als Position 1 - Spiegel, bei der das Substrat die Rückseite des Spiegels bildet und die Beschichtung an der Seite des Betrachters oder der Lichteintrittsseite aufgebracht ist, ist dabei in besonders vorteilhafter Ausgestaltung die Schichtenfolge Substrat/H/M/L/H vorgesehen, wobei H eine Schicht aus hochbrechendem Material mit einem Brechungsindex von mindestens zwei, L eine Schicht aus niedrigbrechendem Material mit einem Brechungsindex von höchstens zwei und M eine metallische Schicht ist. Die beiden Schichten H aus hochbrechenden Material können dabei hinsichtlich ihrer Parameter, insbesondere hinsichtlich Materialwahl, Dicke und dergleichen, zueinander gleich oder auch voneinander verschieden sein. Der Brechungsindex ist dabei auszuwerten bei einer Wellenlänge von 550 nm.

Besonders gute optische Eigenschaften sind dabei erreichbar, indem der Rückspiegel hinsichtlich seiner optischen Eigenschaften besonders auf eine so genannte Designwellenlänge hin ausgelegt ist, die in besonderem Maße an die Empfindlichkeitskurve des Auges angepasst ist. Als besonders geeignete DesignWellenlänge ist dabei eine Wellenlänge von etwa 550 nm gewählt, die dem Maximum der spektralen Augen-Empfindlichkeitskurve für Tagessehen entspricht. Um eine besonders geeignete Anpassung des Schichtsystems an diese Designwellenlänge zu gewährleisten, sind vorzugsweise die Schichtdicken, insbesondere die so genannte optische Schichtdicke, also das Produkt aus tatsächlicher Schichtdicke und Brechzahl, der dielektrischen Schichten jeweils geeignet gewählt.

Vorzugsweise weist dabei bei einer Wellenlänge von 550 nm die dem Substrat benachbarte Schicht H eine optische Schichtdicke von 98 nm bis 394 nm, vorzugsweise von höchstens 344 nm, die Schicht L eine optische Schichtdicke von 58 bis 203 nm, vorzugsweise von höchstens 189 nm, die weitere Schicht H eine optische Schichtdicke von 48 nm bis 238 nm, vorzugsweise 190 nm, und die Schicht M eine Dicke von 2 nm bis 7 nm auf.

In alternativer vorteilhafter Ausgestaltung kann der halbdurchlässige Spiegel auch für eine Verwendung als Position 2 - Spiegel, bei der das Substrat die Vorderseite bildet und die mehrlagige Beschichtung auf der vom Betrachter oder vom einfallenden Licht abgewandten Seite des Substrats angeordnet ist, ausgestaltet sein. Bei einer derartigen Ausgestaltung ist in besonders vorteilhafter Ausgestaltung auf dem Substrat licht-austrittsseitig eine mehrlagige Beschichtung mit der Schichtenfolge Substrat/H/L/M/H aufgebracht, wobei H eine Schicht aus hochbrechendem Material mit einem Brechungsindex von mindestens zwei, L eine Schicht aus niedrigbrechendem Material mit einem Brechungsindex von höchstens zwei und M eine metallische Schicht ist. Die beiden Schichten H aus hochbrechenden Material können dabei hinsichtlich ihrer Parameter, insbesondere hinsichtlich Materialwahl, Dicke und dergleichen, zueinander gleich oder auch voneinander verschieden sein. Um die genannte besonders bevorzugte Anpassung an eine als geeignet angesehene Designwellenlänge zu gewährleisten, ist dieser halbdurchlässige Spiegel in weiterer vorteilhafter Ausgestaltung derart ausgestaltet, dass bei einer Wellenlänge von 550 nm die dem Substrat benachbarte Schicht H eine optische Schichtdicke von 49 nm bis 344 nm, vorzugsweise von höchstens 246 nm, die Schicht L eine optische Schichtdicke 4 von 44 nm bis 203 nm, vorzugsweise von höchstens 174 nm, die weitere Schicht H eine optische Schichtdicke von 95 nm bis 167 nm und die Schicht M eine Dicke von 3 nm bis 9 nm aufweist.

Besonders günstige Eigenschaften sind für beide genannten Varianten erreichbar, in dem in weiterer vorteilhafter Ausgestaltung der Brechungsindex des niedrigbrechenden Materials mindestens um 0,2, vorzugsweise mindestens um 0,5, geringer ist als der Brechungsindex des hochbrechenden Materials.

Besonders hochwertige und für den Einsatz im Kraftfahrzeug-Bereich gut geeignete Spiegelsysteme sind erreichbar, indem in vorteilhafter Ausgestaltung das die Schichten H bildende hochbrechende Material Titandioxid ($TiO_2$) und/oder Nioboxid ($Nb_2O_5$), das die Schicht L bildende niedrigbrechende Material Siliziumdioxid ($SiO_2$) und/oder das die Schicht M bildende Metall Nickel (Ni), Chrom (Cr) und/oder Titan (Ti) umfasst.

Vorteilhafterweise ist der halbdurchlässige Spiegel als Spiegel in einem Kraftfahrzeug, insbesondere als Kraftfahrzeug-Innenraumspiegel, eingesetzt.

Die mit der Erfindung erzielten Vorteile bestehen insbesondere darin, dass durch die gezielte Vorgabe der optischen Eigenschaften des halbdurchlässigen Spiegels und insbesondere durch deren Umsetzung unter Rückgriff auf die genannten Schichtenfolgen ein auch unter alltäglichen Betriebsbedingungen besonders langlebiger und zuverlässiger Spiegel bereitstellbar ist, der für den Einsatz in Kombination mit zugeordneten Display- oder Anzeigeelementen besonders geeignet ist. Insbesondere ist es durch die genannte Kombination der optischen Eigenschaften möglich, gerade im vergleichsweise anspruchsvollen Umfeld der Kraftfahrzeug-Innenraumspiegel sämtliche dort bestehenden Anforderungen in besonders weitgehendem Maße zu erfüllen.

Ausführungsbeispiele der Erfindung werden anhand einer Zeichnung näher erläutert. Darin zeigen:

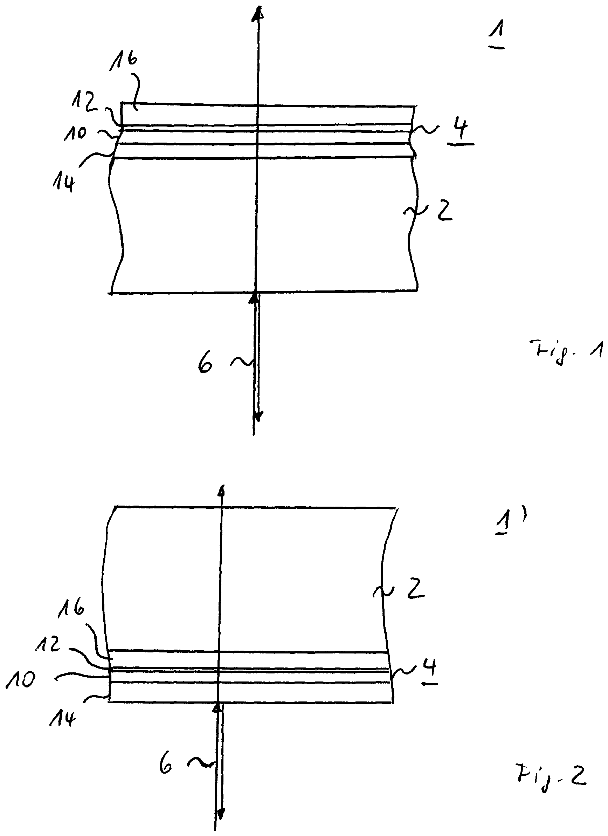

Fig. 1, 2: jeweils schematisch im Ausschnitt einen Rückblickspiegel für Kraftfahrzeuge.

Gleiche Teile sind in beiden Figuren mit denselben Bezugszeichen versehen. Der in Fig. 1, 2 jeweils ausschnittsweise im Querschnitt gezeigte Rückblickspiegel 1, 1' ist jeweils als halbdurchlässiger Spiegel zum Einsatz in einem Kraftfahrzeug vorgesehen. Er umfasst jeweils einen Schichtträger oder ein Substrat 2, das im Ausführungsbeispiel transparent und aus Natrium-Silikatglas ausgeführt ist. Um die spiegelnden Eigenschaften sicherzustellen, ist jeweils ein teilweise reflektierendes mehrlagiges Beschichtungssystem 4 vorgesehen, wobei der Rückblickspiegel 1 gemäß Fig. 1 für eine Verwendung in sogenannter Position zwei vorgesehen ist und das Substrat 2 die Vorderseite bildet, wobei die Beschichtung 4 auf der vom durch den Pfeil 6 angedeuteten einfallenden Licht abgewandten Seite des Substrats 2 angeordnet ist. Dem gegenüber ist der Rückblickspiegel 1' gemäß Fig. 2 für eine Verwendung in der sogenannten Position eins vorgesehen, bei der das Substrat 2 die Rückseite bildet und die Beschichtung 4 auf der dem durch den Pfeil 6 angedeuteten einfallenden Licht zugewandten Seite des Substrats 2 angeordnet ist.

Der Rückblickspiegel 1, 1' ist jeweils in besonderem Maße für eine Eignung zur Verwendung als Kraftfahrzeug-Innenraumspiegel ausgestaltet, bei dem eine Kombination mit einem nachgelagerten Display oder einer Anzeigeeinheit realisiert werden soll. Dazu ist der Rückblickspiegel 1, 1' jeweils als halbdurchlässiger Spiegel ausgestaltet, dessen optische Eigenschaften spezifisch an die hierdurch bedingten Erfordernisse, nämlich eine insgesamt hohe Reflexion und eine dennoch ausreichend hohe Transmission für eine ausreichende Displaybeleuchtung sowie für eine ausreichend geringe Reflexion an der Rückseite zur Vermeidung von unerwünschtem Streulicht, angepasst ist. Dazu ist der Spiegel 1, 1' jeweils für einen Lichtreflexionsgrad an der Vorderseite bei Normlichtart C von mindestens 60 %, einem Lichtreflexionsgrad an der Rückseite bei Normlichtart C von höchstens 25 % und einen Lichttransmissionsgrad von mindestens 20 % ausgelegt.

Um diese Auslegungsziele zu erreichen, ist das mehrlagige Schichtsystem 4 jeweils als eine geeignete Kombination aus einer Schicht 10 aus niedrigbrechendem Material L mit einem Brechungsindex bei einer Wellenlänge von 550 nm von weniger als zwei und einer sich in Transmissionsrichtung des Lichts anschließenden Schicht 12 aus metallischem Material M ausgelegt, wobei die hierdurch gegebene Doppelschicht in der Art einer Sandwichbauweise beidseitig von jeweils einer Schicht 14 bzw. 16 aus hochbrechendem Material H mit Brechungsindex bei einer Wellenlänge von 550 nm von mehr als zwei gegeben ist. Das die Schichten 14, 16 bildende hochbrechende Material H umfasst dabei bevorzugt die Materialien $TiO_2$ und/oder $Nb_2O_5$. Das die Schicht 10 bildende niedrigbrechende Material L umfasst vorzugsweise $SiO_2$. Das die Schicht 12 bildende Metall M umfasst vorzugsweise Ni, Cr und/oder Ti.

In der folgenden Tabelle 1 sind halbdurchlässige Spiegelsysteme gemäß der vorliegenden Erfindung hinsichtlich charakteristischer optischer Daten näher aufgeführt. Die mit * gekennzeichneten Bespiele sind dabei lediglich Vergleichsbeispiele.

| Beispiel Nummer | Ver-wen-dung | Schichten auf dem Glas, beginnend mit (1) bis (4) | | | | Reflexion | | | | Transmission | | |
|---|---|---|---|---|---|---|---|---|---|---|---|---|
| | | | | | | | Vorderseite | | Rückseite | | | |
| | | ds(1) [nm] | ds(2) [nm] | ds(3) [nm] | ds(4) [nm] | R(C) | a* (C,2°) | b* (C,2°) | R(C) | T(C) | a* (C,2°) | b* (C, 2°) |
| | | TiO2 | Cr | SiO2 | Nb2O5 | | | | | | | |
| 1* | Position 1 | 35 | 2 | 60 | 70 | 58,6% | -7,5 | -3,7 | 16,9% | 30,6% | 8,4 | -0,3 |
| 2 | Position 1 | 40 | 2 | 60 | 70 | 61,6% | -7,7 | -2,5 | 20,4% | 29,2% | 9,2 | -0,8 |
| 3* | Position 1 | 40 | 1 | 60 | 70 | 58,2% | -8,5 | -4,2 | 32,8% | 35,8% | 9,4 | 2,8 |
| 4 | Position 1 | 40 | 2 | 90 | 50 | 65,9% | -6,3 | -4,6 | 22,8% | 25,8% | 8,4 | 3,4 |
| 5 | Position 1 | 40 | 4 | 120 | 30 | 64,2% | -7,0 | 0,1 | 8,6% | 22,4% | 8,9 | -6,1 |
| 6 | Position 1 | 40 | 5 | 40 | 80 | 62,6% | -8,3 | 1,3 | 6,4% | 21,7% | 10,0 | -8,4 |
| 7 | Position 1 | 50 | 3 | 70 | 60 | 70,4% | -6,4 | -2,0 | 19,4% | 21,4% | 9,2 | 1,4 |
| 8* | Position 1 | 50 | 4 | 35 | 70 | 58,9% | -9,2 | -9,2 | 14,5% | 27,4% | 8,8 | 9,6 |
| 9 | Position 1 | 50 | 4 | 40 | 70 | 62,5% | -8,4 | -6,6 | 14,3% | 25,0% | 9,0 | 6,8 |
| 10 | Position 1 | 50 | 4 | 130 | 20 | 60,4% | -9,0 | 3,4 | 10,4% | 26,3% | 9,3 | -5,9 |
| 11* | Position 1 | 50 | 4 | 130 | 18 | 58,6% | -9,0 | 1,4 | 10,2% | 27,5% | 8,8 | -3,8 |
| 12 | Position 1 | 50 | 4 | 140 | 20 | 60,0% | -10,7 | 12,8 | 10,1% | 26,5% | 11,2 | -14,7 |
| 13* | Position 1 | 50 | 4 | 150 | 20 | 58,3% | -13,0 | 26,2 | 9,6% | 27,8% | 13,1 | -23,4 |
| 14 | Position 1 | 50 | 6 | 40 | 100 | 61,0% | -9,2 | 34,3 | 6,3% | 22,5% | 9,9 | -28,2 |
| 15* | Position 1 | 50 | 6 | 40 | 110 | 51,2% | 7,8 | 20,0 | 5,4% | 28,3% | -7,4 | -16,3 |
| 16 | Position 1 | 50 | 6 | 130 | 20 | 64,8% | -8,0 | 3,9 | 6,6% | 20,1% | 8,9 | -6,6 |
| 17 | Position 1 | 50 | 7 | 60 | 100 | 61,5% | 2,5 | 22,3 | 5,5% | 20,7% | -3,1 | -20,7 |
| 18* | Position 1 | 50 | 8 | 60 | 100 | 63,2% | 2,5 | 21,3 | 5,9% | 18,5% | -3,2 | -20,0 |
| 19 | Position 1 | 50 | 7 | 100 | 20 | 61,1% | -7,2 | -10,5 | 8,4% | 20,7% | 6,6 | 12,3 |
| 20 | Position 1 | 60 | 6 | 110 | 20 | 63,8% | -7,3 | -3,3 | 12,6% | 20,5% | 8,2 | 7,2 |
| 21 | Position 1 | 90 | 4 | 110 | 30 | 60,5% | -4,8 | 9,0 | 18,1% | 20,3% | 9,5 | -8,7 |

| | | TiO2 | SiO2 | Cr | Nb2O5 | | | | | | | |
|---|---|---|---|---|---|---|---|---|---|---|---|---|
| 22 | Position 1 | 140 | 4 | 100 | 40 | 63,0% | -9,2 | -6,8 | 7,3% | 20,1% | 6,3 | 1,4 |
| 23 | Position 1 | 160 | 6 | 140 | 20 | 61,8% | -19,4 | 24,5 | 7,1% | 20,2% | 9,6 | -12,8 |
| 24* | Position 1 | 170 | 6 | 140 | 20 | 62,8% | -16,8 | 29,2 | 9,0% | 19,8% | 11,9 | -13,8 |
| | | | | | | | | | | | | |
| | | TiO2 | SiO2 | Cr | Nb2O5 | | | | | | | |
| 25* | Position 2 | 17 | 100 | 5 | 60 | 59,3% | -6,1 | -3,1 | 15,0% | 27,2% | 4,8 | 10,4 |
| 26 | Position 2 | 20 | 100 | 5 | 60 | 61,5% | -6,3 | -2,6 | 15,5% | 25,6% | 5,5 | 9,9 |
| 27 | Position 2 | 20 | 110 | 5 | 70 | 60,8% | -6,6 | 8,2 | 21,8% | 22,9% | 7,6 | 2,4 |
| 28* | Position 2 | 30 | 100 | 2 | 50 | 59,2% | -7,6 | -7,2 | 29,6% | 32,7% | 6,9 | 8,4 |
| 29 | Position 2 | 30 | 100 | 3 | 50 | 61,1% | -7,3 | -6,6 | 20,9% | 28,9% | 6,3 | 7,5 |
| 30 | Position 2 | 30 | 120 | 6 | 50 | 66,6% | -8,0 | 5,3 | 7,0% | 20,4% | 7,6 | -8,8 |
| 31 | Position 2 | 30 | 130 | 6 | 50 | 65,0% | -10,1 | 14,5 | 6,9% | 21,5% | 10,0 | -17,9 |
| 32 | Position 2 | 30 | 140 | 6 | 50 | 62,1% | -12,3 | 26,9 | 6,6% | 23,5% | 11,5 | -25,9 |
| 33* | Position 2 | 30 | 150 | 6 | 50 | 57,8% | -11,2 | 37,2 | 6,3% | 26,4% | 8,9 | -28,9 |
| 34 | Position 2 | 40 | 100 | 4 | 60 | 69,8% | -7,4 | 4,9 | 21,7% | 20,9% | 8,7 | -2,2 |
| 35* | Position 2 | 60 | 60 | 6 | 35 | 56,8% | -6,6 | -9,5 | 3,2% | 20,5% | 5,7 | 0,1 |
| 36 | Position 2 | 60 | 60 | 6 | 40 | 60,7% | -6,8 | -9,1 | 2,5% | 20,7% | 5,5 | 3,0 |
| 37 | Position 2 | 70 | 60 | 4 | 50 | 64,6% | -8,4 | -0,4 | 14,6% | 24,5% | 8,3 | -1,9 |
| 38* | Position 2 | 80 | 25 | 7 | 60 | 59,1% | -10,5 | 2,5 | 14,6% | 24,1% | 8,9 | 6,5 |
| 39 | Position 2 | 80 | 30 | 7 | 60 | 61,8% | -9,9 | 4,3 | 14,6% | 22,3% | 8,8 | 4,2 |
| 40 | Position 2 | 80 | 30 | 9 | 50 | 61,6% | -9,3 | -0,9 | 3,4% | 20,1% | 6,4 | 1,0 |
| 41* | Position 2 | 80 | 30 | 10 | 50 | 63,3% | -8,9 | -0,3 | 3,6% | 18,1% | 6,2 | 1,3 |
| 42 | Position 2 | 90 | 40 | 6 | 70 | 60,9% | -7,2 | 21,2 | 23,9% | 20,8% | 7,2 | -6,2 |
| 43* | Position 2 | 90 | 40 | 6 | 75 | 59,1% | -6,8 | 24,6 | 28,3% | 19,5% | 7,8 | -7,3 |
| 44 | Position 2 | 90 | 80 | 6 | 50 | 62,5% | 0,5 | 7,0 | 6,4% | 23,3% | -4,1 | -9,9 |
| 45 | Position 2 | 100 | 50 | 7 | 60 | 60,2% | 2,0 | 6,8 | 11,0% | 23,1% | -5,1 | 1,2 |
| 47* | Position 2 | 150 | 70 | 9 | 50 | 65,6% | -16,1 | -6,4 | 3,5% | 17,7% | 15,5 | 9,7 |

Die wiedergegebenen Parameter spezifizieren die tatsächlichen Schichtdicken der einzelnen Schichten zusammen mit dem jeweils verwendeten Material. Die optische Schichtdicke kann hieraus für die genannten Materialien durch Multiplikation mit der jeweiligen Brechzahl bei einer Wellenlänge von 550 mn, also für $TiO_2$ mit 2,46, für $Nb_2O_5$ mit 2,38 und für $SiO_2$ mit 1,45, ermittelt werden. Des Weiteren sind die Reflexionsgrade bei Normlichtart C an der Vorderseite des Spiegels und an dessen Rückseite sowie der Transmissionsgrad bei Normlichtart C angegeben. Im Hinblick auf wichtige lichttechnische Größen wird dabei auf folgende Normen verwiesen:

- DIN 5031-3 (März 1982) Tabelle Augenempfindlichkeitskurve V ($\lambda$) photopisch Tagessehen)
- DIN 5033-2 (Mai 1992) Farbmetrischer Normalbeobachter 2° CIE 1931 und 2° - Normvalenzsystem
- DIN 5033-3 (Juli 1992) L*a*b*-Farbenraum CIE 1976
- DIN 5033-7 (Juli 1983) Tabelle Strahlungsfunktion S ($\lambda$) der Normlichtart C
- DIN 5036-1 (Juli 1978)

Lichtreflexionsgrad

$$\rho = \frac{\Phi_\rho}{\Phi} = \frac{\int\limits_{0}^{\infty} \Phi_{e\lambda} \cdot \rho(\lambda) \cdot V(\lambda) \cdot d\lambda}{\int\limits_{0}^{\infty} \Phi_{e\lambda} \cdot V(\lambda) \cdot d\lambda}$$

$\rho(\lambda)$ spektraler Reflexionsgrad

Bei Verwendung von Normlichtart C ist der wellenlängenabhängige Lichtstrom $\Phi_{e\lambda}$ durch S($\lambda$) ersetzbar dto. Lichttransmissionsgrad

$$\tau = \frac{\Phi_\tau}{\Phi} = \frac{\int\limits_0^\infty \Phi_{e\lambda} \cdot \tau(\lambda) \cdot V(\lambda) \cdot d\lambda}{\int\limits_0^\infty \Phi_{e\lambda} \cdot V(\lambda) \cdot d\lambda}$$

Bei Verwendung von Normlichtart C ist der wellenlängenabhängige Lichtstrom $\Phi_{e\lambda}$ durch S($\lambda$) ersetzbar dto. Lichttransmissionsgrad

$$\tau = \frac{\Phi_\tau}{\Phi} = \frac{\int\limits_0^\infty \Phi_{e\lambda} \cdot \tau(\lambda) \cdot V(\lambda) \cdot d\lambda}{\int\limits_0^\infty \Phi_{e\lambda} \cdot V(\lambda) \cdot d\lambda}$$

Bezugszeichenliste

| | |
|---|---|
| 1, 1' | halbdurchlässiger Spiegel |
| 2 | Substrat |
| 4 | Beschichtungssystem |
| 6 | Pfeil |
| 10 | Schicht |
| 12 | Schicht |
| 14, 16 | Schicht |

| | |
|---|---|
| L | niedrigbrechendes Material |
| M | metallisches Material |
| H | hochbrechendes Material |

**Patentansprüche**

1.  Halbdurchlässiger Spiegel, insbesondere zur Verwendung als Rückblickspiegel im Automobilbereich, insbesondere als Innenraumspiegel, wobei der halbdurchlässiger Spiegel (1,1') ein transparentes Substrat (2), vorzugsweise aus Kalknatronglas, umfasst, auf dem vorder- und/oder rückseitig eine mehrlagige Beschichtung aufgebracht ist, wobei die Beschichtung derart ausgestaltet ist, dass der Spiegel (1,1') bei senkrechtem Lichteinfall unter Normlichtart C nach CIE 1971 an seiner Vorderseite einen Lichtreflexionsgrad von mindestens 60 %, vorzugsweise von mindestens 65 %, und einen Lichttransmissionsgrad von mindestens 20 %, vorzugsweise von mindestens 25 %, aufweist, **dadurch gekennzeichnet, dass** der Spiegel (1,1') bei senkrechtem Lichteinfall unter Normlichtart C nach CIE 1971 an seiner Rückseite einen Lichtreflexionsgrad von höchstens 25%, vorzugsweise von höchstens 20 % aufweist.

2.  Halbdurchlässiger Spiegel (1, 1') nach Anspruch 1, dessen Farbwerte a*, b* nach CIE 1971 jeweils in Reflexion an der Vorderseite sowie in Transmission bei senkrechtem Lichteinfall unter Normlichtart C nach CIE 1971 und bei einem Beobachterwinkel von 2° einen absoluten Betrag von höchstens 10 aufweisen.

3.  Halbdurchlässiger Spiegel (1) nach Anspruch 1 oder 2, bei dem die mehrlagige Beschichtung rückseitig mit einer Schichtenfolge Substrat/H/L/M/H aufgebracht ist, wobei H eine Schicht (14, 16) aus hochbrechendem Material mit einem Brechungsindex von mindestens 2, L eine Schicht (10) aus niedrigbrechendem Material mit einem Brechungsindex von höchstens 2 und M eine metallische Schicht (12) ist.

4.  Halbdurchlässiger Spiegel (1) nach Anspruch 3, bei dem der Brechungsindex des niedrigbrechenden Materials mindestens um 0,2, vorzugsweise mindestens um 0,5, geringer als der Brechungsindex des hochbrechenden Materials ist.

5. Halbdurchlässiger Spiegel (1) nach Anspruch 3 oder 4, bei dem bei einer Wellenlänge von 550 nm die dem Substrat (2) benachbarte Schicht H (14) eine optische Schichtdicke von 49 nm bis 344 nm, vorzugsweise höchstens 246 nm, die Schicht L (10) eine optische Schichtdicke 44 nm bis 203 nm, vorzugsweise höchstens 174 nm, die weitere Schicht H (16) eine optische Schichtdicke von 95 nm bis 167 nm und die Schicht M (12) eine Dicke von 3 nm bis 9 nm aufweist.

6. Halbdurchlässiger Spiegel (1') nach Anspruch 1 oder 2, bei dem die mehrlagige Beschichtung vorderseitig mit der Schichtenfolge Substrat/H/M/L/H aufgebracht ist, wobei H eine Schicht (14, 16) aus hochbrechendem Material mit einem Brechungsindex von mindestens 2, L eine Schicht (10) aus niedrigbrechendem Material mit einem Brechungsindex von höchstens 2 und M eine metallische Schicht (12) ist.

7. Halbdurchlässiger Spiegel (1') nach Anspruch 6, bei dem der Brechungsindex des niedrigbrechenden Materials mindestens um 0,2, vorzugsweise mindestens um 0,5, geringer als der Brechungsindex des hochbrechenden Materials ist.

8. Halbdurchlässiger Spiegel (1') nach Anspruch 6 oder 7, bei dem bei einer Wellenlänge von 550 nm die dem Substrat (2) benachbarte Schicht H (16) eine optische Schichtdicke von 98 nm bis 394 nm, vorzugsweise höchstens 344 nm, die Schicht L (10) eine optische Schichtdicke 58 nm bis 203 nm, vorzugsweise höchstens 189 nm, die weitere Schicht H (14) eine optische Schichtdicke von 48 nm bis 238 nm, vorzugsweise höchstens 190 nm, und die Schicht M (12) eine Dicke von 2 nm bis 7 nm aufweist.

9. Halbdurchlässiger Spiegel (1, 1') nach einem der Ansprüche 3 bis 8, bei dem das die Schichten H (14, 16) bildende hochbrechende Material $TiO_2$ und/oder Nb2O5 umfasst.

10. Halbdurchlässiger Spiegel (1, 1') nach einem der Ansprüche 3 bis 9, bei dem das die Schicht L (10) bildende niedrigbrechende Material SiO2 umfasst.

11. Halbdurchlässiger Spiegel (1, 1') nach einem der Ansprüche 3 bis 10, bei dem das die Schicht M (12) bildende Metall Ni, Cr und/oder Ti umfasst.

12. Innenraumspiegel für ein Kraftfahrzeug, umfassend einen halbdurchlässigen Spiegel (1,1') nach einem der Ansprüche 1 bis 11, und ein vom Betrachter aus gesehen hinter der Rückseite des halbdurchlässigen Spiegels (1,1') angeordnetes Anzeigeelement.

**Claims**

1. Semi-transparent mirror, in particular for use as a rear-view mirror in the automotive sector, in particular as an interior mirror, wherein the semi-transparent mirror (1, 1') comprises a transparent substrate (2), preferably made of soda-lime glass, on which a multilayer coating is applied on the front and/or rear side, wherein the coating is designed such that the mirror (1,1') has a light reflectance value of at least 60 %, preferably at least 65 %, and a light transmittance value of at least 20 %, preferably at least 25 %, on its front side at perpendicular light incidence with a standard illuminant C according to CIE 1971,
**characterized in that**
the mirror (1,1') has a light reflectance value of at most 25 %, preferably at most 20 %, on its rear side at perpendicular light incidence with a standard illuminant C according to CIE 1971.

2. The semi-transparent mirror (1,1') according to claim 1, whose colour values a*, b* according to CIE 1971 in reflection at the front side as well as in transmission at perpendicular light incidence with a standard illuminant C according to CIE 1971 and at an observer angle of 2° respectively have an absolute value of at most 10.

3. The semi-transparent mirror (1) according to claim 1 or 2, wherein the multilayer coating is applied on the rear side with a layer sequence substrate/H/L/M/H, wherein H is a layer (14, 16) of high refractive index material with a refractive index of at least 2, L is a layer (10) of low refractive index material with a refractive index of at most 2 and M is a metallic layer (12).

4. The semi-transparent mirror (1) according to claim 3, wherein the refractive index of the low refractive index material is at least 0.2, preferably at least 0.5, lower than the refractive index of the high refractive index material.

5. The semi-transparent mirror (1) according to claim 3 or 4, wherein, at a wavelength of 550 nm, the layer H (14) adjacent to the substrate (2) has an optical layer thickness of 49 nm to 344 nm, preferably at least 246 nm, the layer L (10) has an optical layer thickness of 44 nm to 203 nm, preferably at least 174 nm, the further layer H (16) has an optical layer thickness of 95 nm to 167 nm and the layer M (12) has a thickness of 3 nm to 9 nm.

6. The semi-transparent mirror (1') according to claim 1 or 2, wherein the multilayer coating is applied on the front side with the layer sequence substrate/H/M/L/H, wherein H is a layer (14, 16) of high refractive index material with a refractive index of at least 2, L is a layer (10) of low refractive index material with a refractive index of at most 2 and M is a metallic layer (12).

7. The semi-transparent mirror (1') according to claim 6, wherein the refractive index of the low refractive index material is at least 0.2, preferably at least 0.5, lower than the refractive index of the high refractive index material.

8. The semi-transparent mirror (1') according to claim 6 or 7, wherein, at a wavelength of 550 nm, the layer H (16) adjacent to the substrate (2) has an optical layer thickness of 98 nm to 394 nm, preferably at most 344 nm, the layer L (10) has an optical layer thickness of 58 nm to 203 nm, preferably at most 189 nm, the further layer H (14) has an optical layer thickness of 48 nm to 238 nm, preferably at most 190 nm, and the layer M (12) has a thickness of 2 nm to 7 nm.

9. The semi-transparent mirror (1, 1') according to one of claims 3 to 8, wherein the high refractive index material forming the layers H (14, 16) comprises $TiO_2$ and/or Nb2O5.

10. The semi-transparent mirror (1, 1') according to one of claims 3 to 9, wherein the low refractive index material forming the layer L (10) comprises Si02.

11. The semi-transparent mirror (1, 1') according to one of claims 3 to 10, wherein the metal forming the layer M (12) comprises Ni, Cr and/or Ti.

12. An interior mirror for a motor vehicle, comprising a semi-transparent mirror (1,1') according to one of claims 1 to 11, and a display element arranged behind the rear side of the semi-transparent mirror (1,1') from the perspective of the observer.

**Revendications**

1. Miroir semi-transparent, destiné notamment à être utilisé en tant que rétroviseur dans le secteur automobile, notamment en tant que rétroviseur d'habitacle, le miroir semi-transparent (1,1') comprenant un substrat (2) transparent, de préférence en verre sodocalcique, sur la face avant et/ou arrière duquel est appliqué un revêtement multicouches, le revêtement étant conçu de telle sorte, que lors d'une incidence perpendiculaire de la lumière, selon l'illuminant normalisé C selon CIE 1971, le miroir (1,1') fasse preuve sur sa face avant d'un facteur de réflexion lumineuse d'au moins 60 %, de préférence d'au moins 65 %, et d'une transmittance de lumière d'au moins 20 %, de préférence d'au moins 25 %,
**caractérisé en ce que**
lors d'une incidence perpendiculaire de la lumière, selon l'illuminant normalisé C selon CIE 1971, le miroir (1,1') fait preuve sur sa face arrière d'un indice de réflexion lumineuse d'un maximum de 25 %, de préférence d'un maximum de 20 %.

2. Miroir semi-transparent (1, 1') selon la revendication 1, dont les valeurs de couleurs a*, b*, selon CIE 1971, que ce soit chaque fois en réflexion sur la face avant ou en transmission lors d'une incidence perpendiculaire de la lumière, selon l'illuminant normalisé C selon CIE 1971, sous un angle d'observation de 2° présentent une valeur absolue d'un maximum de 10.

3. Miroir semi-transparent (1) selon la revendication 1 ou 2, sur lequel le revêtement multicouches est appliqué sur la face arrière selon une séquence de couches substrat/H/L/M/H, H désignant une couche (14, 16) en une matière à indice de réfraction élevé, faisant preuve d'un indice de réfraction d'au moins 2, L désignant une couche (10) en une matière à faible indice de réfraction, faisant preuve d'un indice de réfraction d'au maximum 2 et M désignant une couche métallique (12).

**4.** Miroir semi-transparent (1) selon la revendication 3, sur lequel l'indice de réfraction de la matière à faible indice de réfraction est inférieur d'au moins 0,2, de préférence, inférieur d'au moins 0,5, à l'indice de réfraction de la matière à indice de réfraction élevé.

**5.** Miroir semi-transparent (1) selon la revendication 3 ou 4, sur lequel, à une longueur d'onde de 550 nm, la couche H (14) voisine du substrat (2) présente une épaisseur de couche optique de 49 nm à 344 nm, de préférence, d'un maximum de 246 nm, la couche L (10) présente une épaisseur de couche optique de 44 nm à 203 nm, de préférence, d'un maximum de 174 nm, la couche supplémentaire H (16) présente une épaisseur de couche optique de 95 nm à 167 nm et la couche M (12) présente une épaisseur de 3 nm à 9 nm.

**6.** Miroir semi-transparent (1') selon la revendication 1 ou 2, sur lequel le revêtement multicouches est appliqué sur la face avant selon la séquence de couches substrat/H/M/L/H, H désignant une couche (14, 16) en une matière à indice de réfraction élevé, faisant preuve d'un indice de réfraction d'au moins 2, L désignant une couche (10) en une matière à faible indice de réfraction, faisant preuve d'un indice de réfraction d'au maximum 2 et M désignant une couche métallique (12).

**7.** Miroir semi-transparent (1') selon la revendication 6, sur lequel l'indice de réfraction de la matière à faible indice de réfraction est inférieur d'au moins 0,2, de préférence inférieur d'au moins 0,5, à l'indice de réfraction de la matière à indice de réfraction élevé.

**8.** Miroir semi-transparent (1') selon la revendication 6 ou 7, sur lequel, à une longueur d'onde de 550, la couche H (16) voisine du substrat (2) présente une épaisseur de couche optique de 98 nm à 394 nm, de préférence d'un maximum de 344 nm, la couche L (10) présente une épaisseur de couche optique de 58 nm à 203 nm, de préférence d'un maximum de 189 nm, la couche supplémentaire H (14) présente une épaisseur de couche optique de 48 nm à 238 nm, de préférence d'un maximum de 190 nm, et la couche M (12) présente une épaisseur de 2 nm à 7 nm.

**9.** Miroir semi-transparent (1, 1') selon l'une quelconque des revendications 3 à 8, sur lequel la matière à indice de réfraction élevé formant les couches H (14, 16) comprend du $TiO_2$ et/ou du Nb2O5.

**10.** Miroir semi-transparent (1, 1') selon l'une quelconque des revendications 3 à 9, sur lequel la matière à faible indice de réfraction formant la couche L (10) comprend du SiO2.

**11.** Miroir semi-transparent (1, 1') selon l'une quelconque des revendications 3 à 10, sur lequel le métal formant la couche M (12) comprend du Ni, du Cr et/ou du Ti.

**12.** Rétroviseur d'habitacle pour un véhicule automobile, comprenant un miroir semi-transparent (1,1') selon l'une quelconque des revendications 1 à 11, et un élément d'affichage placé du point de vision de l'observateur derrière la face arrière du miroir semi-transparent (1,1').

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007053710 A2
- WO 2004026633 A2
- US 20050007645 A1
- US 6065840 A
- US 2007053085 A1